# EUROPÄISCHE PATENTSCHRIFT

(11) **EP 3 083 067 B1**
(45) Veröffentlichungstag und Bekanntmachung des Hinweises auf die Patenterteilung: **12.09.2018**
(21) Anmeldenummer: 14812562.8
(22) Anmeldetag: 17.12.2014
(51) Int. Cl.: B01J 19/24, B01J 19/26, B01J 4/00, C08G 69/04, C08G 69/18, B05B 1/26

(54) **VERFAHREN ZUR HERSTELLUNG VON POLYAMIDEN MIT EINER SPRÜHDÜSENANORDNUNG ZUR KOLLISION VON SPRÜHSTRAHLEN**
METHOD FOR PRODUCING POLYAMIDES WITH A SPRAY NOZZLE ASSEMBLY FOR THE COLLISION OF SPRAY JETS
PROCÉDÉ DE FABRICATION DE POLYAMIDES DANS UN DISPOSITIF DE BUSES À COLLISION DE JETS

(30) Priorität: 17.12.2013 EP 13197765
(43) Veröffentlichungstag der Anmeldung: 26.10.2016
(73) Patentinhaber: BASF SE, 67056 Ludwigshafen am Rhein (DE)
(72) Erfinder: ZHU, Ning, 68163 Mannheim (DE); OSTERMANN, Rainer, 49459 Lembruch (DE); SACK, Heinrich, 67454 Haßloch (DE); GÖTZ, Alexander, 67149 Meckenheim (DE); STAMMER, Achim, 67251 Freinsheim (DE); SIMON, Dirk, 68163 Mannheim (DE)
(74) Vertreter: BASF IP Association
(86) Internationale Anmeldenummer: PCT/EP2014/078209
(87) Internationale Veröffentlichungsnummer: WO 2015/091641

(56) Entgegenhaltungen:
- EP-A1- 0 121 606
- WO-A1-2007/096383
- DE-A1- 1 795 358
- DE-B1- 1 779 037
- JP-A- H1 149 805
- JP-A- H10 204 105
- US-A- 4 765 540
- US-A1- 2003 153 709

## Beschreibung

### HINTERGRUND DER ERFINDUNG

Die vorliegende Erfindung betrifft ein Verfahren zur Herstellung von Polyamiden mit einer Sprühdüsenanordnung zur Kollision von Sprühstrahlen.

### STAND DER TECHNIK

Sprühdüsenanordnungen zur Kollision von Sprühstrahlen sind im Stand der Technik bekannt.

Hierbei werden zwei Sprühstrahlen so ausgerichtet, dass sie unter einem bestimmten Winkel aufeinander treffen. Der Impulsaustausch der zwei aufeinanderprallenden Sprühstrahlen kann zu einer Vereinigung einzelner Tropfen der Sprühstrahlen und im Gravitationsfeld zur Ausbildung einer Falllinie beispielsweise aus Einzeltropfen führen oder aber zur Zerstäubung der Sprühstrahlen und zur Ausbildung eines Sprühkegels führen.

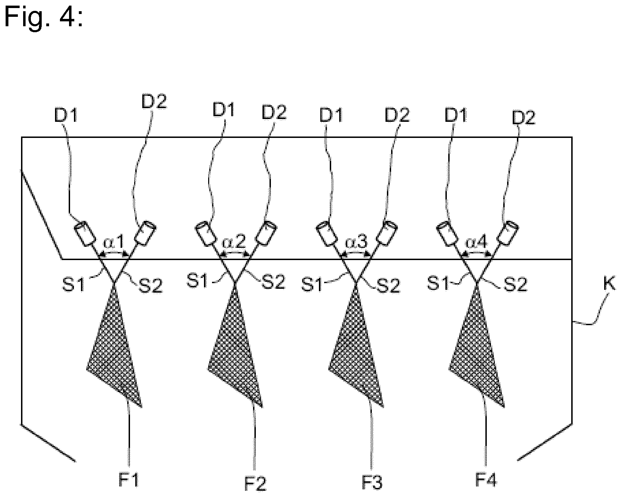

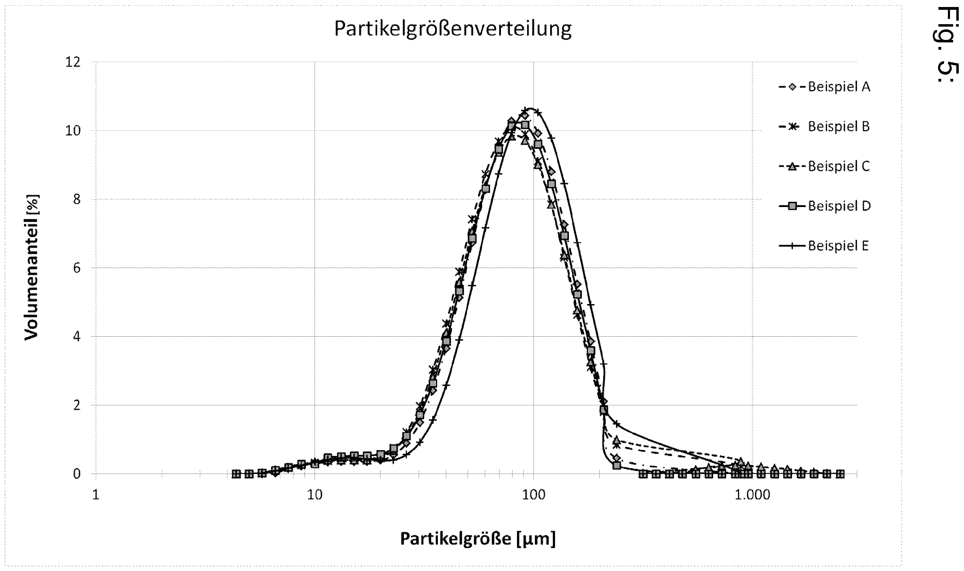

Die JP 11049805 beschreibt ein Verfahren zur Sprühpolymerisation mit einer ersten und einer zweiten Schlitzdüse, wobei der Winkel zwischen den austretenden Schlitzdüsensprühstrahlen größer als 15° sein soll und nach der Kollision der Schlitzsprühstrahlen ein Fallvorhang aus der gemischten Flüssigkeit der Sprühstrahlen entsteht. Gemäß den Abbildungen 4 und 5 werden Tropfengrößen im Bereich von Millimetern erreicht.

Die JP10204105 beschreibt ein Verfahren zur Sprühpolymerisation mit einer ersten und einer zweiten Düse, wobei der Winkel zwischen den austretenden Düsensprühstrahlen größer als 15° sein soll und nach der Kollision der Sprühstrahlen eine Falllinie aus der gemischten Flüssigkeit der Sprühstrahlen entsteht.

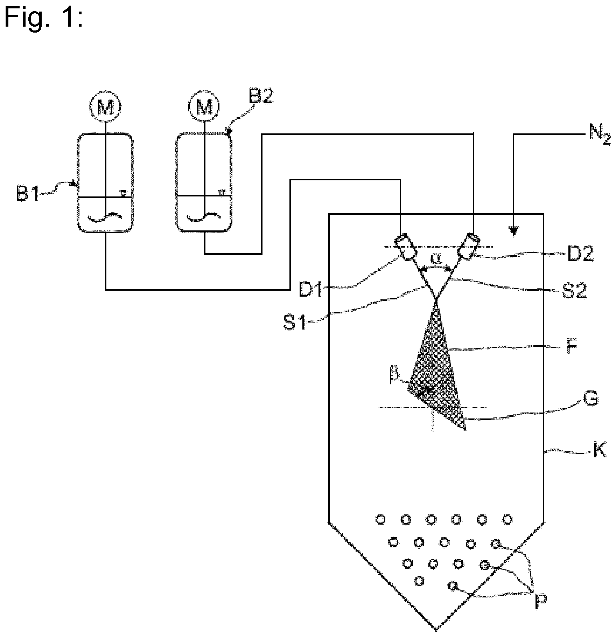

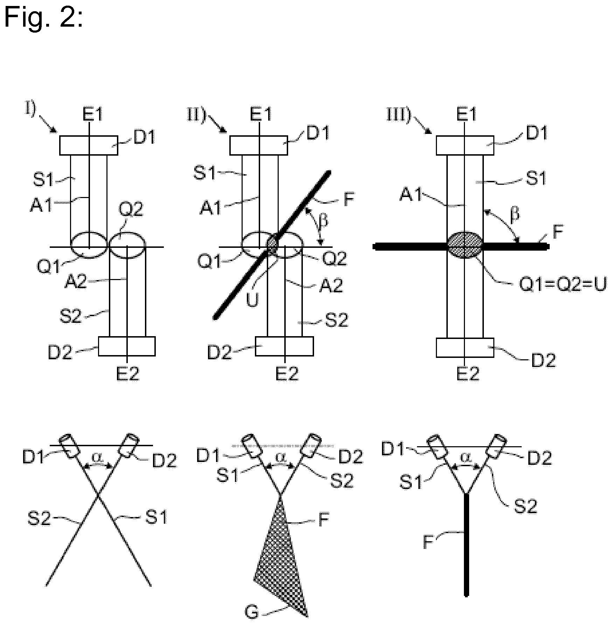

Die US 7,288,610 B2 und die EP 1424346 A4 beschreiben Verfahren zur Tropfenpolymerisation mit der Mischung einer ersten und einer zweiten Flüssigkeit in einer Gasphase, wobei wenigstens eine der beiden Flüssigkeiten die Gestalt eines sich dreidimensional ausbreitenden Flüssigkeitsfilms hat. Als Stand der Technik werden in Figur 1 zwei Flüssigkeitsstrahlen abgebildet, welche nach einer Kollision als tropfenförmige Falllinie verlaufen. In der Figur 2 werden als Stand der Technik zwei aus Schlitzdüsen ausströmende Flüssigkeitsfilme abgebildet, welche sich zu einem Flüssigkeitsvorhang vereinigen.

Die US 2003/153709 offenbart eine Vorrichtung und ein Verfahren für die kontinuierliche Herstellung von Homo- oder Co-Polymeren durch eine Freisprühstrahl-Aufprall-Micromischung von Fluiden. Hierbei sind wenigstens zwei Sprühstrahlen in einem Winkel zueinander angeordnet und treffen in einem Aufprallpunkt aufeinander und bilden einen resultierenden Sprühstrahl aus. Gleichzeitig ist wenigstens ein dritter Sprühstrahl auf den einen Aufprallpunkt gerichtet.Die Herstellung von Polyamiden mit dieser Vorrichtung ist nicht beschrieben.

Die WO 2007/096383 offenbart ein Verfahren und eine Vorrichtung zur Durchführung chemischer und physikalischer Prozesse, wobei Reaktanden durch Düsen auf einen Kollisionspunkt gespritzt werden und durch Vermischung der Reaktanden ein Produkt entsteht. Die Düsenstrahlen sind in einem Winkel zueinander ausgerichtet. Ein Verfahren zur Herstellung von Polymeren wird nicht genannt.

Die DE 17 95 358 beschreibt ein Verfahren und eine Vorrichtung zur Herstellung von Formkörpern aus Polyamiden, bei dem Lactamschmelzen gleichzeitig durch zwei geheizte Rohre in das polymerisierende Gemisch eingedrückt werden. Insbesondere sind die Schmelzen horizontal gerichtet und es kollidieren keine freien Strahlen miteinander.

Die DE 17 79 037 beschreibt einen Mischkopf zum Herstellen von Kunststoffen durch Mischen von mindestens zwei miteinander reagierenden Flüssigkeiten in einer Mischkammer. Die miteinander zu reagierenden Flüssigkeiten treffen schräg aufwärts gerichtet gegeneinander und spritzen als gemeinsamer, vorvermischter Strahl gegen den oberen Teil der Wandung der Mischkammer. Beim Zurückfließen des Strahls bzw. des Gemisches in Richtung der Auslassöffnung kreuzt dieses Gemisch die eintretenden Strahlen und wird dabei gründlich durchwirbelt.

Die US 4,765,540 beschreibt ein Verfahren und eine Vorrichtung zur Erzeugung mehrer Sprühstrahlen, wobei sich die Sprühstrahlen nicht überschneiden und nicht kollidieren. Des Weiteren werden in einem verbesserten Verfahren Partikel in die Sprühstrahl(en) eingeführt.

Bekannte Sprühdüsenanordnungen zur Kollision von Sprühstrahlen sind noch verbesserungswürdig und haben oft den Nachteil von Fouling, insbesondere im Bereich zwischen den Sprühdüsen. Zur Verringerung von Fouling werden für Fouling anfällige Positionen beispielsweise auch mit Gasströmen überspült, was andererseits einen nachteiligen Gasverbrauch und eine Bereitstellung zusätzlicher Gasdosiervorrichtungen zur Folge hat. Des Weiteren sind im Stand der Technik generierte Tropfengrößen im Millimeterbereich bekannt, was großen Partikelgrößen entspricht.

Der vorliegenden Erfindung liegt daher die Aufgabe zugrunde, ein Verfahren zur Herstellung von Polyamiden mit einer verbesserten Sprühdüsenanordnung zur Kollision von Sprühstrahlen bereitzustellen, bei der die zuvor genannten Nachteile vermieden werden. Mit dieser Sprühdüsenanordnung soll ein Verfahren zur Herstellung von Polyamid, insbesondere von Polyamidpartikeln mit einer stabilen und engen Partikelgrößenverteilungskurve, zur Verfügung gestellt werden, womit die Partikelgrößen in der laufenden Produktion ohne Produktionsausfall variiert werden können, sich die Produktionskapazität einfach und platzsparend erweitern lässt, mit geringer Anfälligkeit gegen Fouling und verminderten Reinigungsstillständen. Des Weiteren soll aufgrund der geringen Anfälligkeit gegen Fouling auf den Einsatz einer Spülvorrichtung beispielsweise mit einem Gas verzichtet werden können.

### ZUSAMMENFASSUNG DER ERFINDUNG

Überraschender Weise wurde nun gefunden, dass diese Aufgabe mit einem Verfahren unter Verwendung einer Sprühdüsenanordnung nach Anspruch 1 gelöst wird.

Die verwendete Sprühdüsenanordnung weist gegenüber konventionellen Sprühdüsenanordnungen eine derartige Ausrichtung zweier Sprühdüsen auf, dass sich nach der Kollision der Sprühstrahlen im Gegensatz beispielsweise zu dreidimensionalen Sprühkegeln mit einer großen kreisförmigen Grundfläche im Gravitationsfeld ein Kollisionssprühfächer mit einer im Wesentlichen längsförmigen Grundlinie ausbildet. Für eine Produktionskapazitätssteigerung können mehrere Sprühdüsenanordnungen derart hintereinander angeordnet werden, dass mehrere ausgebildete Kollisionssprühfächer die Produktionskapazität bei geringem Platzbedarf erhöhen. Zudem ist zur Steigerung der Produktionskapazität auch eine modulweise Erweiterung der eingesetzten Sprühdüsenanordnung möglich. Gegenüber konventionellen Sprühdüsenanordnungen zeigt die verwendete Sprühdüsenanordnung kein Fouling innerhalb der Düsen und auch nicht in dem Bereich um die Sprühdüsen herum. Das erfindungsgemäße Verfahren zur Herstellung von Polyamiden mit der verwendeten Sprühdüsenanordnung zeigt im Vergleich zu konventionellen Verfahren wesentlich stabilere und engere Partikelgrößenverteilungen der hergestellten Partikel.

Erfindungsgemäß verwendet wird daher eine Sprühdüsenanordnung zur Kollision von Sprühstrahlen, umfassend mindestens eine erste Sprühdüse, ausbildend einen ersten Sprühstrahl mit einer ersten Sprühstrahlquerschnittsfläche und einer ersten Sprühstrahllängserstreckungsachse, wobei die erste Sprühstrahllängserstreckungsachse in einer ersten vertikalen Ebene im Gravitationsfeld ausgerichtet ist und eine zweite Sprühdüse, ausbildend einen zweiten Sprühstrahl mit einer zweiten Sprühstrahlquerschnittsfläche und einer zweiten Sprühstrahllängserstreckungsachse, wobei die zweite Sprühstrahllängserstreckungsachse in einer zweiten vertikalen Ebene im Gravitationsfeld ausgerichtet ist, wobei die erste und die zweite Sprühdüse eine dem Gravitationsfeld zugewandte Sprührichtung aufweisen und derart einander gegenüber angeordnet sind, dass die ausgebildeten Sprühstrahlen in der dem Gravitationsfeld zugewandten Sprührichtung in einem Kollisionsbereich kollidieren, wobei der zwischen dem ersten und dem zweiten Sprühstrahl eingeschlossene Winkel im Bereich von 5° bis 170° ist und die erste und die zweite Sprühdüse derart angeordnet sind, dass die erste Sprühstrahlquerschnittsfläche des ersten Sprühstrahls mit der zweiten Sprühstrahlquerschnittsfläche des zweiten Sprühstrahls beim Kollidieren eine Schnittmenge bildet.

In einer geeigneten Ausführungsform der Erfindung wird eine Verschaltung umfassend mindestens zwei hintereinander angeordnete Sprühdüsenanordnungen, wie zuvor und im Folgenden definiert, verwendet.

Gegenstand der Erfindung ist ein Verfahren zur Herstellung von Polyamiden nach Anspruch 1 mit einer Sprühdüsenanordnung oder einer Verschaltung von Sprühdüsenanordnungen, umfassend die Schritte:
a) Bereitstellen einer ersten fluiden Sprühzusammensetzung und einer zweiten fluiden Sprühzusammensetzung mit der Maßgabe, dass
   - die erste und/oder zweite fluide Sprühzusammensetzung wenigstens eine zur Polyamidbildung befähigte Komponente enthält, ausgewählt unter: Lactamen, Aminocarbonsäuren, Aminocarbonsäureamiden, Aminocarbonsäurenitrilen, Diaminen, Dicarbonsäuren, Dicarbonsäure-/Diaminsalzen, Dinitrilen und Mischungen davon,
   - für den Fall einer aktivierten anionischen Lactampolymerisation nur eine der beiden fluiden Sprühzusammensetzungen wenigstens einen Aktivator enthält und nur die andere wenigstens einen Katalysator enthält,
b) Versprühen einer der beiden fluiden Sprühzusammensetzungen durch die erste oder zweite Sprühdüse (D1, D2) unter Erhalt eines ersten Sprühstrahls (S1, S2) und Versprühen der anderen fluiden Sprühzusammensetzung durch die andere Sprühdüse (D1, D2) unter Erhalt eines zweiten Sprühstrahls (S1, S2),
c) Kollidieren des ersten Sprühstrahls (S1) mit dem zweiten Sprühstrahl (S2), wobei die eine und die andere fluide Sprühzusammensetzung miteinander ein zur Polyamidbildung befähigtes Gemisch bildet, welches zu einem Polyamid reagiert und sich zwischen der Sprühdüsenanordnung ein im Gravitationsfeld vertikal ausgerichteter Kollisionssprühfächer (F) ausbildet,
d) Austragen des in Schritt c) erhaltenen Polyamids,
e) gegebenenfalls Nachreinigung des in Schritt d) ausgetragenen Polyamids,
f) gegebenenfalls Trocknung des in Schritt d) ausgetragenen und/oder in Schritt e) nachgereinigten Polyamids.

### DETAILLIERTE BESCHREIBUNG DER ERFINDUNG

Im Rahmen der vorliegenden Erfindung wird unter Kollision von Sprühstrahlen ein Aufeinandertreffen von Bestandteilen von Sprühstrahlen verstanden.

Im Rahmen der vorliegenden Erfindung wird unter Sprühstrahlquerschnittsfläche die Fläche eines Sprühstrahls bei einem zu der Längserstreckungsachse des Sprühstrahls senkrechten Schnitt durch den Sprühstrahl verstanden.

Im Rahmen der vorliegenden Erfindung wird unter Sprühstrahllängserstreckungsachse die imaginäre Achse eines Sprühstrahls in Längsrichtung des Sprühstrahls verstanden.

Im Rahmen der vorliegenden Erfindung wird unter einer vertikalen Ebene im Gravitationsfeld ausgerichtet ein imaginäres zweidimensionales Objekt verstanden, welches aufgespannt ist durch zwei Vektoren, wobei der eine der beiden Vektoren in Richtung des Gravitationsfeldes angeordnet ist. Der andere der beiden Vektoren ist in Richtung einer Sprühstrahllängserstreckungsachse angeordnet. Ein Sprühstrahl kann innerhalb dieses zweidimensionalen Vektorraums in verschiedenen Winkeln versprüht werden.

Im Rahmen der vorliegenden Erfindung wird unter einer dem Gravitationsfeld zugewandten Sprührichtung eine Richtung verstanden, welche ein Sprühstrahl in seiner Sprühstrahllängserstreckungsachse hat, die zu dem Erdmagnetfeld hinweist und nicht von dem Erdmagnetfeld weg zeigt.

Im Rahmen der vorliegenden Erfindung wird unter einem Kollisionsbereich ein Bereich verstanden, in welchem Bestandteile von Sprühstrahlen aufeinandertreffen.

Im Rahmen der vorliegenden Erfindung wird unter einem eingeschlossenen Winkel der kleinere Winkel, auch Innenwinkel genannt, zwischen zwei sich überschneidenden Sprühstrahlen verstanden.

Im Rahmen der vorliegenden Erfindung wird unter der Schnittmenge die bei der Kollision von Sprühstrahlen gemeinsame Menge von sich überschneidenden Sprühstrahlquerschnittsflächen verstanden. Beispielsweise ist die Schnittmenge zweier Sprühstrahlen die Menge derjenigen Elemente, die sowohl zu dem einen als auch zu dem anderen Sprühstrahl gehören. Daneben kann jeder der zwei Sprühstrahlen auch eine Menge an Elementen enthalten, welche nicht zu dem anderen Sprühstrahl gehören. Beispielsweise bildet sich bei der Kollision von sich überschneidenden Sprühstrahlquerschnittsflächen zweier gegenüberliegender in einem bestimmten Winkel zueinander angeordneter Sprühstrahlen im Gravitationsfeld ein Kollisionssprühfächer aus. In welchem Winkel, dem sogenannten Scherwinkel, der bei der Kollision im Gravitationsfeld ausgebildete Kollisionssprühfächer zwischen den Sprühstrahlen angeordnet ist, ist abhängig von der Lage der Scherebene zwischen den Sprühstrahlen, wobei die Scherebene von der Position und der Fläche der Schnittmenge, in welcher die Sprühstrahlen kollidieren, beeinflusst wird.

Bevorzugt sind die erste und die zweite Sprühdüse derart angeordnet, dass die erste vertikale Ebene im Gravitationsfeld parallel oder geradlinig zu der zweiten vertikalen Ebene im Gravitationsfeld ausgerichtet ist.

Im Rahmen der vorliegenden Erfindung wird unter geradlinig auf einer imaginären Linie angeordnet verstanden.

Bevorzugt sind die erste und die zweite Sprühdüse derart angeordnet, dass die Schnittmenge keine deckungsgleiche Überlagerung der ersten Sprühstrahlquerschnittsfläche mit der zweiten Sprühstrahlquerschnittsfläche ist und sich zwischen dem ersten und dem zweiten Sprühstrahl eine Scherebene ausbildet.

Im Rahmen der vorliegenden Erfindung wird unter Scherebene die Ebene der relativen Verschiebung der sich überlagernden Anteile der Sprühstrahlen zueinander verstanden.

Vorzugsweise sind die erste Sprühstrahlquerschnittsfläche und die zweite Sprühstrahlquerschnittsfläche nicht gleich und die erste und die zweite Sprühdüse derart angeordnet, dass die erste Sprühstrahlquerschnittsfläche des ersten Sprühstrahls mit der zweiten Sprühstrahlquerschnittsfläche des zweiten Sprühstrahls beim Kollidieren eine Teilmenge bildet.

Im Rahmen der vorliegenden Erfindung wird unter gleich eine Übereinstimmung in geometrischer Form und Größe der Sprühstrahlquerschnittsfläche verstanden.

Im Rahmen der vorliegenden Erfindung wird unter Teilmenge verstanden, wenn bei einer durch Kollision von Sprühstrahlen bedingten Überschneidung von Sprühstrahlquerschnittsflächen jedes Element des einen Sprühstrahls auch ein Element des anderen Sprühstrahls ist. Dabei kann der andere der beiden Sprühstrahlen auch eine Menge an Elementen enthalten, welche nicht zu dem einen Sprühstrahl gehören, wobei die Menge an Elementen des einen Sprühstrahls immer auch ein Element des anderen Sprühstrahls ist.

Vorzugsweise sind die erste und die zweite Sprühdüse derart ausgerichtet, dass sich nach der Kollision des ersten mit dem zweiten Sprühstrahl im Kollisionsbereich ein von dem Kollisionsbereich aus im Gravitationsfeld vertikal angeordneter Kollisionssprühfächer ausbildet.

Im Rahmen der vorliegenden Erfindung wird unter Kollisionssprühfächer die von dem Kollisionsbereich aus beginnende fächerförmige Ausbreitung von Elementen aus dem ersten und/oder zweiten Sprühstrahl nach der Kollision der Sprühstrahlen verstanden.

Vorzugsweise sind die erste und die zweite Sprühdüse derart ausgerichtet, dass der nach der Kollision des ersten mit dem zweiten Sprühstrahl im Gravitationsfeld vertikal angeordnete Kollisionssprühfächer in einem Winkel im Bereich von 0 < bis < ½π und π < bis < 3/2π oder im Bereich von ½π < bis < π und 3/2π bis < 2π zwischen der vertikalen Ebene des Kollisionssprühfächers und einer vertikalen Ebene senkrecht zu der ersten und zweiten vertikalen Ebene im Gravitationsfeld angeordnet ist.

Vorzugsweise sind die erste und die zweite Sprühdüse derart ausgerichtet, dass der nach der Kollision des ersten mit dem zweiten Sprühstrahl von dem Kollisionsbereich aus im Gravitationsfeld vertikal angeordnete Kollisionssprühfächer einen Öffnungswinkel im Bereich von 1° bis 170°, vorzugsweise im Bereich von 20° bis 150°, besonders bevorzugt im Bereich von 30° bis 120° aufweist.

Im Rahmen der vorliegenden Erfindung wird unter einem Öffnungswinkel der von dem Kollisionsbereich ausgehend sich öffnende Winkel zwischen den den Kollisionssprühfächer beiderseitig begrenzenden Randbereichen des Kollisionssprühfächers verstanden. Der Öffnungswinkel ist hierbei der eingeschlossene, kleinere Innenwinkel zwischen den den Kollisionssprühfächer beiderseitig begrenzenden Randbereichen des Kollisionssprühfächers.

Vorzugsweise sind die erste und die zweite Sprühdüse derart ausgerichtet, dass der nach der Kollision des ersten mit dem zweiten Sprühstrahl von dem Kollisionsbereich aus im Gravitationsfeld vertikal angeordnete Kollisionssprühfächer eine Grundfläche aufweist, wobei die geometrische Form der Grundfläche ausgewählt ist unter einer Linie, einem Oval, einem schmalen Rechteck, einem Bogen, einem Kreisbogen, einem Konus und Kombinationen hiervon.

Die Position und Fläche der Teilmenge, in welcher die Sprühstrahlen kollidieren, beeinflusst die geometrische Form/Ausgestaltung des bei der Kollision ausgebildeten Kollisionssprühfächers zwischen den Sprühstrahlen. Zudem werden die Form des Kollisionssprühfächers und insbesondere auch die Partikelgröße und die Partikelgrößenverteilung in dem Kollisionssprühfächer durch weitere Parameter, wie beispielsweise der Viskosität der Sprühzusammensetzung, der Sprühstrahlgeschwindigkeit und der Oberflächenspannung der Sprühzusammensetzung, beeinflusst.

Im Rahmen der vorliegenden Erfindung wird unter der geometrischen Form der Grundfläche die sich bei einem Querschnitt durch den vertikal angeordneten Kollisionssprühfächer aufzeigende geometrische Form des Querschnitts verstanden.

Vorzugsweise ist die erste und/oder zweite Sprühdüse eine Lochplatte, eine Lochdüse, eine Blende, eine Schlitzdüse eine Kombination hiervon.

Vorzugsweise sind die erste und zweite Sprühdüse in einem Düsenkopf angeordnet.

Vorzugsweise weist die erste und/oder zweite Sprühdüse eine Düsenkanallänge in einem Bereich von 1 bis 1000 µm, vorzugsweise im Bereich von 3 bis 50 µm, besonders bevorzugt in einem Bereich von 5 bis 20 µm auf.

Im Rahmen der vorliegenden Erfindung wird unter Düsenkanallänge die Länge eines von einem Sprühstrahl durchströmten Kanals, welcher bis zum Austritt des Sprühstrahls aus der Sprühdüse führt, verstanden. Die erste und/oder zweite Sprühdüse weisen/ weist einen Düsenkanaldurchmesser in einem Bereich von 25 bis 500 µm, besonders bevorzugt in einem Bereich von 50 bis 250 µm auf.

Im Rahmen der vorliegenden Erfindung wird unter Düsenkanaldurchmesser der Durchmesser eines von einem Sprühstrahl durchströmten Kanals, welcher bis zum Austritt des Sprühstrahls aus der Sprühdüse führt, verstanden.

Vorzugsweise ist die erste und/oder zweite Sprühdüse mit einem Druck im Bereich von 2 bis 200 bar, vorzugsweise im Bereich von 5 bis 100 bar, besonders bevorzugt in einem Bereich von 10 bis 50 bar beaufschlagt. Die erste und/oder zweite Sprühstrahlquerschnittsfläche ist in einem Bereich von 490 bis 197000 µm², besonders bevorzugt in einem Bereich von 1960 bis 50000 µm².

Im Rahmen der vorliegenden Erfindung wird unter einer Sprühstrahlquerschnittsfläche die Querschnittsfläche eines Sprühstrahls in einem Bereich nach dem Austritt des Sprühstrahls aus einer Sprühdüse bis in den Kollisionsbereich verstanden. Die erste und/oder zweite Sprühdüse sind/ ist derart angeordnet, dass der durch beide Sprühstrahlen eingeschlossene Winkel im Bereich von 5° bis 170°, vorzugsweise im Bereich von 30° bis 150°, besonders bevorzugt in einem Bereich von 40° bis 120° ist.

Vorzugsweise sind mindestens zwei, beispielsweise 2, 3, 4, 5, 6, 7, 8, 9, 10, 11, 12, Sprühdüsenanordnungen hintereinander angeordnet.

Im Rahmen der vorliegenden Erfindung handelt es sich bei hintereinander angeordneten Sprühdüsenanordnungen um eine Anordnung von mehreren, beispielsweise 2, 3, 4, 5, 6, 7, 8, 9, 10, 11, 12, Sprühdüsenpaaren in Parallelschaltung.

### Verfahren zur Herstellung von Polyamiden

Polyamide gehören zu den weltweit in großem Umfang hergestellten Polymeren und dienen neben den Hauptanwendungsbereichen Fasern, Werkstoffe und Folien einer Vielzahl weiterer Verwendungszwecke. Unter den Polyamiden ist das Polyamid 6 mit einem Anteil von etwa 57 % das am meisten hergestellte Polymer. Das klassische Verfahren zur Herstellung von Polyamid 6 (Polycaprolactam) ist die hydrolytische Polymerisation von ε-Caprolactam, die immer noch von sehr großer technischer Bedeutung ist. Konventionelle hydrolytische Herstellverfahren sind z. B. in Ullmann's Ecyclopedia of Industrial Chemistry, Online Ausgabe 15.03.2003, Vol. 28, S. 552-553 und Kunststoffhandbuch, ¾ Technische Thermoplaste: Polyamide, Carl Hanser Verlag, 1998, München, S. 42-47 und 65-70 beschrieben. Im ersten Schritt der hydrolytischen Polymerisation reagiert ein Teil des eingesetzten Lactams durch Einwirkung von Wasser unter Ringöffnung zur entsprechenden ω-Aminocarbonsäure. Diese reagiert dann mit weiterem Lactam in Polyadditions- und -kondensationsreaktionen zum entsprechenden Polyamid. In einer bevorzugten Variante reagiert ε-Caprolactam durch Einwirkung von Wasser unter Ringöffnung zu Aminocapronsäure und dann weiter zu Polyamid 6.

Grundsätzlich können auch ionische Polymerisationen, insbesondere anionische Polymerisationen durchgeführt werden.

Grundsätzlich bekannt ist auch ein Verfahren zur Herstellung von Polyamiden durch aktivierte anionische Lactampolymerisation. Dazu werden Lactame, wie beispielsweise Caprolactam, Lauryllactam, Piperidon, Pyrrolidon, etc., in einer basenkatalysierten anionischen Polymerisationsreaktion ringöffnend polymerisiert. Hierzu wird in der Regel eine Schmelze aus Lactam, die einen alkalischen Katalysator und einen so genannten Aktivator (auch Co-Katalysator oder Initiator) enthält, bei erhöhten Temperaturen polymerisiert. Die aktivierte anionische Lactampolymerisation wird am Beispiel von ε-Caprolactam in Polyamide, Kunststoffhandbuch, Vol. 3/4, ISBN 3-446-16486-3, 1998, Carl Hanser Verlag, S. 49-52 und in Macromolecules, Vol. 32, No. 23 (1999), S. 7726 beschrieben.

Eine alternative Route zur Herstellung von Polyamiden ist die Polykondensation von Aminonitrilen. Dazu zählt z. B. die Herstellung von Polyamid 6 aus 6-Aminocapronitril (ACN). Nach einer üblichen Vorgehensweise umfasst dieses Verfahren eine Nitrilhydrolyse und anschließende Aminamidierung. Diese erfolgt in der Regel in separaten Reaktionsschritten in Gegenwart eines Heterogenkatalysators, wie TiO₂. Eine mehrstufige Fahrweise hat sich als praktikabel erwiesen, da beide Reaktionsschritte unterschiedliche Erfordernisse bezüglich Wassergehalt und Vollständigkeit der Reaktion haben. Auch bei dieser Syntheseroute ist es vielfach vorteilhaft, das erhaltene Polymer einer Reinigung zur Entfernung von Monomeren/Oligomeren zu unterziehen.

### Schritt a)

In Schritt a) des erfindungsgemäßen Verfahrens wird wenigstes eine Sprühzusammensetzung bereitgestellt, die zur Polyamidbildung befähigte Komponente enthält, die ausgewählt ist unter Lactamen, Aminocarbonsäuren, Aminocarbonsäureamiden, Aminocarbonsäurenitrilen, Diaminen, Dicarbonsäuren, Dicarbonsäure-/Diaminsalzen, Dinitrilen und Mischungen davon.

Im Rahmen der vorliegenden Erfindung wird unter einer Sprühzusammensetzung eine Zusammensetzung verstanden, mit welcher sich eine Sprühdüsenanordnung beaufschlagen lässt und welche sich zum Versprühen mit einer Düsenanordnung eignet, d. h., dass sich die Sprühzusammensetzung in feinste Tröpfchen als Aerosol (Nebel) in einem Gas, wie beispielsweise Luft, Inertgas zerteilen lässt.

Die in Schritt a) bereitgestellte Sprühzusammensetzung enthält vorzugsweise als zur Polyamidbildung befähigte Komponente wenigstens ein C₅- bis C₁₂-Lactam und/oder ein Oligomer davon. Die Lactame sind insbesondere ausgewählt unter ε-Caprolactam, 2-Piperidon (δ-Valerolatam), 2-Pyrrolidon (γ-Butyrolactam), Capryllactam, Önanthlactam, Lauryllactam, deren Mischungen und Oligomeren davon.

Vorzugsweise wird in Schritt a) wenigstens eine Sprühzusammensetzung bereitgestellt, die wenigstens ein Lactam oder wenigstens ein Aminocarbonsäurenitril und/oder Oligomere dieser Monomere enthält. In einer speziellen Ausführungsform enthält die erste und/oder zweite fluide Sprühzusammensetzung wenigstens ein Comonomer, ausgewählt unter ω-Aminocarbonsäuren, ω-Aminocarbonsäureamide, ω-Aminocarbonsäuresalze, ω-Aminocarbonsäureestern, Diamine und Dicarbonsäuren, Dicarbonsäure-/Diaminsalze, Dinitrilen und Mischungen davon.

In einer speziellen Ausführung dient das erfindungsgemäße Verfahren der Herstellung von Homopolyamiden. Homopolyamide leiten sich von einem Lactam oder einer Aminocarbonsäure ab und lassen sich durch eine einzelne Wiederholungseinheit beschreiben. Polyamid 6-Grundbausteine können beispielsweise aus Caprolactam, Aminocapronitril, Aminocapronsäure oder Gemischen davon aufgebaut sein. Bevorzugte Homopolyamide sind Nylon-6 (PA 6, Polycaprolactam), Nylon-7 (PA 7, Polyenantholactam oder Polyheptanamid), Nylon-10 (PA 10, Polydecanamid), Nylon-11 (PA 11, Polyundecanlactam) und Nylon-12 (PA 12, Polydodecanlactam). Besonders bevorzugt sind PA 6 und PA 12, insbesondere bevorzugt ist PA 6.

In einer weiteren speziellen Ausführung dient das erfindungsgemäße Verfahren der Herstellung von Copolyamiden. Copolyamide leiten sich von mehreren unterschiedlichen Monomeren ab, wobei die Monomere untereinander jeweils durch eine Amidbindung miteinander verbunden sind. Mögliche Copolyamidbausteine können sich beispielsweise von Lactamen, Aminocarbonsäuren, Dicarbonsäuren und Diaminen ableiten. Bevorzugte Copolyamide sind Polyamide aus Hexamethylendiamin und Adipinsäure (PA 66) sowie Polyamide aus Caprolactam, Hexamethylendiamin und Adipinsäure (PA 6/66). Copolyamide können die Polyamidbausteine in verschiedenen Verhältnissen eingebaut enthalten.

Vorzugsweise wird zur Herstellung von Copolyamiden in Schritt a) ein Monomergemisch bereitgestellt, das zusätzlich zu wenigstens einem Lactam oder Aminocarbonsäurenitril und/oder Oligomer davon wenigstens ein damit copolymerisierbares zur Bildung von Amidbindungen befähigtes Monomer (M1) enthält.

Geeignete Monomere (M1) sind Dicarbonsäuren, sind beispielsweise aliphatische C₄₋₁₀-alpha, omega-Dicarbonsäuren, wie Bernsteinsäure, Glutarsäure, Adipinsäure, Pimelinsäure, Korksäure, Acelainsäure, Sebacinsäure und Dodecandisäure. Auch aromatische C₈₋₂₀-Dicarbonsäuren, wie Terephthalsäure und Isophthalsäure, können eingesetzt werden.

Als Monomere (M1) geeignete Diamine können α,ω-Diamine mit vier bis zehn Kohlenstoffatomen, wie Tetramethylendiamin, Pentamethylendiamin, Hexamethylendiamin, Heptamethylendiamin, Octamethylendiamin, Nonamethylendiamin und Decamethylendiamin, eingesetzt werden. Besonders bevorzugt ist Hexamethylendiamin.

Unter den als Monomere (M1) geeigneten Salzen der genannten Dicarbonsäuren und Diaminen ist insbesondere das Salz aus Adipinsäure und Hexamethylendiamin, so genanntes AH-Salz, bevorzugt.

In einer weiteren speziellen Ausführung dient das erfindungsgemäße Verfahren der Herstellung von Polyamidcopolymeren. Polyamidcopolymere enthalten neben den Polyamidgrundbausteinen weitere Grundbausteine, die nicht durch Amidbindungen miteinander verbunden sind (= Monomere M2). Der Anteil an eingebauten Monomeren M2 in Polyamidcopolymeren beträgt vorzugsweise höchstens 40 Gew.-%, besonders bevorzugt höchstens 20 Gew.-%, insbesondere höchstens 10 Gew.-%, bezogen auf das Gesamtgewicht der Grundbausteine des Polyamidcopolymers.

Vorzugsweise wird zur Herstellung von Polyamidcopolymeren in Schritt a) ein Monomergemisch bereitgestellt, das
- wenigstens ein Lactam oder Aminocarbonsäurenitril und/oder Oligomer davon,
- gegebenenfalls wenigstens ein damit copolymerisierbares Monomer (M1), und
- wenigstens ein damit copolymerisierbares Monomer (M2)
enthält.

Bevorzugte Monomere (M2) sind Lactone. Bevorzugte Lactone sind beispielsweise ε-Caprolacton und/oder γ-Butyrolacton.

Bei der Herstellung der Polyamide können ein oder mehrere Kettenregler eingesetzt werden, beispielsweise aliphatische Amine oder Diamine, wie Triacetondiamin bzw. Mono- oder Dicarbonsäure, wie Propionsäure und Essigsäure, oder aromatische Carbonsäuren, wie Benzoesäure oder Terephthalsäure.

Für den Fall einer aktivierten anionischen Lactampolymerisation enthält eine der beiden fluiden Sprühzusammensetzungen wenigstens einen Aktivator und die andere wenigstens einen Katalysator.

Geeignete Katalysatoren für den Einsatz in dem erfindungsgemäßen Verfahren sind gängige Katalysatoren, wie sie üblicherweise für die anionische Polymerisation eingesetzt werden. Dazu zählen speziell Verbindungen, welche die Bildung von Lactamanionen ermöglichen. Die Lactamanionen an sich können ebenfalls als Katalysator fungieren. Derartige Katalysatoren sind beispielsweise aus Polyamide, Kunststoffhandbuch, Vol. 3/4, 1998, Carl Hanser Verlag, S. 52 bekannt.

Der Katalysator ist vorzugsweise ausgewählt unter Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen.

Besonders bevorzugt wird ein Katalysator eingesetzt, der ausgewählt ist unter Natriumhydrid, Natrium und Natriumcaprolactamat. Insbesondere wird als Katalysator Natriumcaprolactamat eingesetzt. In einer speziellen Ausführungsform wird eine Lösung von Natriumcaprolactamat in Caprolactam eingesetzt. Eine solche Mischung ist kommerziell unter der Bezeichnung Brüggolen® C10 der BrüggemannChemical, L. Brüggemann Kommanditgesellschaft, Deutschland erhältlich und enthält 17 bis 19 Gew.-% Natriumcaprolactamat in Caprolactam. Als Katalysator eignet sich ebenfalls insbesondere Bromid-Magnesiumcaprolactamat, z. B. Brüggolen® C1 der Firma BrüggemannChemical, Deutschland.

Das Molverhältnis von Lactam zu Katalysator kann in weiten Grenzen variiert werden, es beträgt in der Regel 1 : 1 bis 10000 : 1, bevorzugt 5 : 1 bis 1000 : 1, besonders bevorzugt 1 : 1 bis 500 : 1.

Die erfindungsgemäße polymerisierbare Lactamzusammensetzung enthält vorzugsweise mindestens einen Aktivator.

Geeignete Aktivatoren für die anionische Polymerisation sind durch elektrophile Reste N-substituierte Lactame (z. B. ein Acyllactam).

Als Aktivatoren eignen sich auch Vorstufen für solche aktivierten N-substituierten Lactame, welche zusammen mit dem Lactam in situ ein aktiviertes Lactam bilden. Die Anzahl der wachsenden Ketten hängt von der Aktivatormenge ab. Als Aktivatoren eignen sich generell Isocyanate, Säureanhydride und Säurehalogenide bzw. deren Umsetzungsprodukte mit dem Lactammonomer.

Als Aktivatoren eignen sich aliphatische, cycloaliphatische, araliphatische und aromatische Diisocyanate. Geeignete aliphatische Diisocyanate sind z. B. Tetramethylendiisocyanat, Hexamethylendiisocyanat, Octamethylendiisocyanat, Decamethylendiisocyanat, Undecamethylendiisocyanat und Dodecamethylendiisocyanat. Geeignete aliphatische Diisocyanate sind z. B. 4,4'-Methylenbis(cyclohexyl)diisocyanat, Isophorondiisocyanat und 1,4-Diisocyanatocyclohexan. Geeignete aromatische Diisocyanate sind z. B. Toluyldiisocyanat, 4,4'-Diphenylmethandiisocyanat, Xylylendiisocyanat und Tetramethylxylylendiisocyanat.

Weiterhin können Polyisocyanate verwendet werden, die sich aus den oben genannten Diisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Dazu zählt z. B. das Isocyanurat von Hexamethylendiisocyanat. Dieses ist kommerziell unter der Bezeichnung Basonat HI 100 von der BASF SE, Deutschland, erhältlich.

Als Aktivatoren eignen sich weiterhin aliphatische Disäurehalogenide, wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis(cyclohexylsäurechlorid), 4,4'-Methylenbis-(cyclohexylsäurebromid), Isophorondisäurechlorid, Isophorondisäurebromid; als auch aromatische Disäurehalogenide, wie Toluylmethylenldisäurechlorid, Toluylmethylendisäurebromid, 4,4'-Methylenbis(phenyl)säurechlorid, 4,4'-Methylenbis(phenyl)säurebromid. Es können auch Mischungen der genannten Verbindung als Aktivatoren eingesetzt werden.

Insbesondere bevorzugt ist eine polymerisierbare Lactamzusammensetzung, wobei als Aktivator mindestens eine Verbindung eingesetzt wird, ausgewählt aus der Gruppe, bestehend aus aliphatischen Diisocyanaten, aromatischen Diisocyanaten, Polyisocyanaten, aliphatischen Disäurehalogeniden und aromatischen Disäurehalogeniden.

In einer bevorzugten Ausführungsform wird als Aktivator mindestens eine Verbindung eingesetzt, die ausgewählt ist unter Hexamethylendiisocyanat, Hexamethylen-1,6-dicarbamoylcaprolactam (d. h. mit Caprolactam blockiertes 1,6-Hexamethylendiisocyanat), Isophorondiisocyanat, Hexamethylendisäurebromid, Hexamethylendisäurechlorid und deren Mischungen. Besonders bevorzugt wird Hexamethylen-1,6-dicarbamoylcaprolactam als Aktivator eingesetzt. Dies ist kommerziell unter der Bezeichnung Brüggolen® C20 der Firma BrüggemannChemical, Deutschland, erhältlich.

Das Molverhältnis von Lactam zu Aktivator kann in weiten Grenzen variiert werden und beträgt in der Regel 1 : 1 bis 10000 : 1, bevorzugt 5 : 1 bis 2000 : 1, besonders bevorzugt 20 : 1 bis 1000 : 1.

### Schritt b)

In Schritt b) des erfindungsgemäßen Verfahrens wird einer der beiden fluiden Sprühzusammensetzungen durch die erste oder zweite Sprühdüse versprüht unter Erhalt eines ersten Sprühstrahls und die andere fluide Sprühzusammensetzung durch die andere Sprühdüse versprüht, unter Erhalt eines zweiten Sprühstrahls.

Im Rahmen der vorliegenden Erfindung wird unter Versprühen das Zerteilen der fluiden Sprühzusammensetzung in feinste Tröpfchen als Aerosol (Nebel) in einem Gas, wie beispielsweise Luft, Inertgas, Kombinationen hiervon verstanden. Das entstehende Aerosol wird auch Sprühstrahl genannt. Dieser kann entweder aus Tropfen bestehen, welche alle denselben Durchmesser aufweisen und einen monodispersen Sprühstrahl ausbilden oder verschieden große Tropfen enthalten und einen polydispersen Sprühstrahl ausbilden.

### Schritt c)

In Schritt c) des erfindungsgemäßen Verfahrens kollidiert der erste Sprühstrahl mit dem zweiten Sprühstrahl, wobei die eine und die andere fluide Sprühzusammensetzung miteinander zu einem Polyamidreaktionsprodukt reagieren und sich zwischen der Sprühdüsenanordnung ein im Gravitationsfeld vertikal ausgerichteter Kollisionssprühfächer ausbildet.

Im Rahmen der vorliegenden Erfindung wird unter Reaktion zu einem Polyamidreaktionsprodukt bevorzugt eine ionische Polymerisation von ε-Caprolactam verstanden.

Im Rahmen der vorliegenden Erfindung wird unter Kollisionssprühfächer die fächerförmige Ausbreitung eines Aerosols nach der Kollision von Sprühstrahlen verstanden. Insbesondere weist der nach der Kollision des ersten mit dem zweiten Sprühstrahl von dem Kollisionsbereich aus im Gravitationsfeld vertikal angeordnete Kollisionssprühfächer eine Grundfläche auf, wobei die geometrische Form der Grundfläche ausgewählt ist unter einer Linie, einem Oval, einem schmalen Rechteck, einem Bogen, einem Kreisbogen, einem Konus und Kombinationen hiervon.

### Schritt d)

In Schritt d) des erfindungsgemäßen Verfahrens wird das in Schritt c) erhaltene Polyamidreaktionsprodukt ausgetragen.

Im Rahmen der vorliegenden Erfindung wird unter austragen jede im Stand der Technik bekannte Möglichkeit zur Austragung von Partikelgut verstanden. Beispielsweise kann dies auch ein Schneckenaustrag, ein Zyklonaustrag, ein Wirbelschichtaustrag, Kombinationen hiervon sein.

### Schritt e)

In Schritt e) des erfindungsgemäßen Verfahrens erfolgt gegebenenfalls die Nachreinigung des in Schritt d) ausgetragenen Polyamidreaktionsproduktes.

Im Rahmen der vorliegenden Erfindung wird unter Nachreinigung insbesondere eine Wäsche des ausgetragenen Polyamidproduktes verstanden. Die Wäsche kann mit Wasser und/oder Aceton erfolgen.

### Schritt f)

In Schritt f) des erfindungsgemäßen Verfahrens erfolgt gegebenenfalls die Trocknung des in Schritt d) ausgetragenen und/oder in Schritt e) nachgereinigten Polyamidreaktionsproduktes.

Die Trocknung von Polyamiden ist dem Fachmann prinzipiell bekannt. Beispielsweise kann das in Schritt d) ausgetragene und/oder in Schritt e) nachgereinigte Polyamidreaktionsprodukt durch in Kontakt bringen mit trockener Luft oder einem trockenen Inertgas oder einem Gemisch davon getrocknet werden. Bevorzugt wird ein Inertgas, z. B. Stickstoff, zur Trocknung eingesetzt. Das in Schritt d) ausgetragene und/oder in Schritt e) nachgereinigte Polyamidreaktionsprodukt kann auch durch in Kontakt bringen mit überhitztem Wasserdampf oder einem Gemisch davon mit einem davon verschiedenen Gas, vorzugsweise einem Inertgas, getrocknet werden. Zur Trocknung können übliche Trockner, z. B. Gegenstrom-, Kreuzstrom-, Teller-, Taumel-, Schaufel-, Riesel-, Konus-, Schachttrockner, Wirbelbetten usw., verwendet werden. Eine geeignete Ausführung ist die diskontinuierliche Trocknung im Taumeltrockner oder Konustrockner unter Vakuum. Eine weitere geeignete Ausführung ist die kontinuierliche Trocknung in so genannten Trockenrohren, die mit einem unter den Trocknungsbedingungen inerten Gas durchströmt werden. In einer speziellen Ausführung wird zur Trocknung wenigstens ein Schachttrockner einsetzt. Bevorzugt wird der Schachttrockner von einem heißen, unter den Nachpolymerisationsbedingungen inertem Gas durchströmt. Ein bevorzugtes inertes Gas ist Stickstoff.

Vorzugsweise wird in dem erfindungsgemäßen Verfahren zur Herstellung von Polyamiden mit einer Sprühdüsenanordnung ab dem Schritt b) die Kammer mit einem inerten Gas durchströmt.

Vorzugsweise ist in dem erfindungsgemäßen Verfahren zur Herstellung von Polyamiden mit einer Sprühdüsenanordnung die fluide Sprühzusammensetzung eine wässrige Sprühzusammensetzung.

Vorzugsweise weisen in dem erfindungsgemäßen Verfahren zur Herstellung von Polyamiden mit einer Sprühdüsenanordnung die in Schritt a) bereitgestellten fluiden Sprühzusammensetzungen eine Viskosität im Bereich von 1 bis 2000 mPa·s, bevorzugt im Bereich von 1 bis 300 mPa·s, ganz besonders bevorzugt im Bereich von 1 bis 30 mPa·s auf.

Vorzugsweise erfolgt in dem erfindungsgemäßen Verfahren zur Herstellung von Polyamiden mit einer Sprühdüsenanordnung das Versprühen in Schritt b) der fluiden Sprühzusammensetzungen und Erhalt des ersten und zweiten Sprühstrahls bei einem Druck im Bereich von 2 bis 200 bar, vorzugsweise im Bereich von 5 bis 100 bar, besonders bevorzugt in einem Bereich von 10 bis 50 bar.

Im Rahmen der vorliegenden Erfindung wird unter dem Druck der relative Druck zwischen dem Eingang zu dem Ausgang einer Sprühdüse verstanden.

Vorzugsweise ist in dem erfindungsgemäßen Verfahren zur Herstellung von Polyamiden mit einer Sprühdüsenanordnung der in Schritt c) ausgebildete Kollisionssprühfächer ein fächerförmiger, flacher Sprühvorhang ist mit einem Öffnungswinkel im Bereich von 5° bis 170°, vorzugsweise im Bereich von 15° bis 150°, besonders bevorzugt im Bereich von 30° bis 120° ist.

Vorzugsweise weist in dem erfindungsgemäßen Verfahren zur Herstellung von Polyamiden mit einer Sprühdüsenanordnung der in Schritt c) ausgebildete Kollisionssprühfächer eine Grundfläche auf, wobei die Form der Grundfläche ausgewählt ist unter einer Linie, einem Oval, einem schmalen Rechteck, einem Bogen, einem Kreisbogen, einem Konus und Kombinationen hiervon.

Vorzugsweise weist in dem erfindungsgemäßen Verfahren zur Herstellung von Polyamiden das in Schritt c) erhaltenen Polyamidreaktionsprodukt Partikelgrößen in einem Bereich von 2 bis 500 µm, vorzugsweise im Bereich von 10 bis 200 µm, besonders bevorzugt in einem Bereich von 20 bis 100 µm aufweist.

Vorzugsweise weist in dem erfindungsgemäßen Verfahren zur Herstellung von Polyamiden das in Schritt d) ausgetragene Polyamidreaktionsprodukt einen Restmonomergehalt im Bereich von 0 bis 5 %, bevorzugt unter 3 %, ganz besonders bevorzugt unter 1 % auf.

Vorzugsweise weist in dem erfindungsgemäßen Verfahren zur Herstellung von Polyamiden das in Schritt d) ausgetragene Polyamidreaktionsprodukt einen Gesamtgehalt an extrahierbaren Rückständen im Bereich von 0,1 bis 5 %, bevorzugt unter 4 %, ganz besonders bevorzugt unter 2 % auf.

Vorzugsweise wird in dem erfindungsgemäßen Verfahren zur Herstellung von Polyamiden die Nachreinigung in Schritt e) mit Lösungsmitteln, ausgewählt aus einer Gruppe von Wasser, Aceton, Alkoholen, Kombinationen hiervon durchgeführt.

Vorzugsweise wird in dem erfindungsgemäßen Verfahren zur Herstellung von Polyamiden die Trocknung in Schritt f) bei einer Temperatur im Bereich von 50 bis 200 °C, bevorzugt im Bereich von 80 bis 150 °C, ganz besonders bevorzugt im Bereich von 100 bis 120 °C durchgeführt.

Vorzugsweise weist in dem erfindungsgemäßen Verfahren zur Herstellung von Polyamiden das erhaltene Polyamidreaktionsprodukt ein zahlenmittleres Molekulargewicht Mₙ im Bereich von 5000 bis 50000 g/mol auf.

Vorzugsweise weist in dem erfindungsgemäßen Verfahren zur Herstellung von Polyamiden das erhaltene Polyamid eine Polydispersität PD von höchstens 4,5 auf.

Vorzugsweise wird das Polyamidreaktionsprodukt, hergestellt mit der Sprühdüsenanordnung zur Herstellung von Granulaten, Folien, Fasern, Formkörpern oder dreidimensionalen Strukturen verwendet.

Vorzugsweise wird das Polyamidreaktionsprodukt erhältlich durch das erfindungsgemäße Verfahren zur Herstellung von Granulaten, Folien, Fasern, Formkörpern oder dreidimensionalen Strukturen verwendet.

Das erfindungsgemäße Verfahren führt zu Polyamiden mit besonders vorteilhaften Eigenschaften. Ein geeignetes Maß für die erzielten Polymereigenschaften ist die Viskositätszahl.

### FIGURENBESCHREIBUNG UND BEISPIELE

Die Erfindung wird nachstehend durch die Figuren 1 bis 5 und den Beispielen A bis E näher erläutert.
- Fig. 1: zeigt schematisch eine Ausführungsform mit einer Sprühdüsenanordnung zur Durchführung des erfindungsgemäßen Verfahrens,
- Fig. 2: zeigt schematisch eine Aufsicht mit zugehöriger Schrägansicht einer Ausführungsform der Düsenanordnung mit verschiedenen Ausrichtungsmöglichkeiten der Sprühdüsen anhand von Sprühstrahlen und deren Sprühstrahlquerschnittsflächen zur Durchführung des erfindungsgemäßen Verfahrens,
- Fig. 3: zeigt schematisch eine Aufsicht mit zugehöriger Schrägansicht einer Ausführungsform der Düsenanordnung mit verschiedenen Ausrichtungsmöglichkeiten der Sprühdüsen anhand von Sprühstrahlen und deren Sprühstrahlquerschnittsflächen zur Durchführung des erfindungsgemäßen Verfahrens,
- Fig. 4: zeigt schematisch eine Ausführungsform einer Anordnung der Düsenanordnung zur Durchführung des erfindungsgemäßen Verfahrens,
- Fig. 5: zeigt die Partikelgrößenverteilungen der erhaltenen Produkte aus den Beispielen A bis E.

In den Figuren 1 bis 4 werden folgende Bezugszeichen verwendet:
- A1: erste Sprühstrahllängserstreckungsachse
- A2: zweite Sprühstrahllängserstreckungsachse
- B1: Behälter 1
- B2: Behälter 2
- D1: erste Sprühdüse
- D2: zweite Sprühdüse
- E1: erste Sprühebene
- E2: zweite Sprühebene
- F: Kollisionssprühfächer
- F1: erster Kollisionssprühfächer
- F2: zweiter Kollisionssprühfächer
- F3: dritter Kollisionssprühfächer
- F4: vierter Kollisionssprühfächer
- G: Grundfläche
- K: Kammer
- P: Polymerpartikel
- U: Schnittmenge
- Q1: erste Sprühstrahlquerschnittsfläche
- Q2: zweite Sprühstrahlquerschnittsfläche
- S1: erster Sprühstrahl
- S2: zweiter Sprühstrahl
- T: Teilmenge
- α: Sprühstrahlschnittwinkel
- β: horizontaler Kollisionssprühfächerwinkel
- γ: vertikaler Auslenkungswinkel

In Figur 1 wird eine Ausführungsform mit einer Sprühdüsenanordnung zur Durchführung des erfindungsgemäßen Verfahrens gezeigt.

In einer Kammer K sind deckenseitig eine erste Sprühdüse D1 mit einem ersten Sprühstrahl S1 und eine zweite Sprühdüse D2 mit einem zweiten Sprühstrahl S2 derart gegenüberliegend angeordnet, dass der erste Sprühstrahl S1 mit dem zweiten Sprühstrahl S2 derart kollidiert, dass ein Kollisionssprühfächer F mit einer Grundfläche G ausgebildet wird. Der Kollisionssprühfächer F ist in einem horizontalen Kollisionssprühfächerwinkel β angeordnet. Mit der Kollision der Sprühstrahlen S1 und S2 ist die Möglichkeit einer Polymerisation gegeben. Nach erfolgreicher Polymerisation können aus der Kammer K bodenseitig Polymerpartikel P ausgetragen werden. Die Kammer K kann in Richtung der Erstreckungsachse des Kollisionssprühfächers F mit Inertgas, insbesondere Stickstoff durchströmt werden. Mit der Ausrichtung der ersten Sprühdüse D1 mit dem ersten Sprühstrahl S1 und der zweiten Sprühdüse D2 mit dem zweiten Sprühstrahl S2 zur Kollision der beiden Sprühstrahlen S1, S2 bildet sich zwischen den beiden Sprühstrahlen S1, S2 ein Sprühstrahlschnittwinkel α aus. Die Versorgung des einen, beispielsweise ersten Sprühstrahls S1, kann aus einem ersten Behälter B1 über die erste Sprühdüse D1 sichergestellt sein. Im vorliegenden Beispiel enthält der erste Behälter neben einer zur Polymerbildung befähigten Komponente auch einen Katalysator. Die Versorgung des anderen, beispielsweise zweiten Sprühstrahls S2, kann aus einem zweiten Behälter B2, beinhaltend einen Aktivator, über die zweite Sprühdüse D2 sichergestellt sein.

In Figur 2 werden schematisch in einer Aufsicht verschiedene Ausrichtungsmöglichkeiten der Sprühdüsen D1, D2, ausbildend die vertikalen Sprühebenen E1, E2 anhand der Sprühstrahlen S1, S2, deren Sprühstrahlquerschnittsflächen Q1, Q2 und Sprühstrahllängserstreckungsachsen A1, A2 zur Durchführung des erfindungsgemäßen Verfahrens gezeigt.

Figur 2 I) zeigt den ersten Sprühstrahl S1 mit der ersten Sprühstrahlquerschnittsfläche Q1 und den zweiten Sprühstrahl S2 mit der zweiten Sprühstrahlquerschnittsfläche Q2, wobei der erste mit dem zweiten Sprühstrahl nicht kollidiert und sich somit keine Schnitt- oder Teilmenge ausbildet. Es bildet sich kein Kollisionssprühfächer aus. Die vertikalen Sprühebenen E1, E2 sind parallel zueinander angeordnet.

Figur 2 II) zeigt den ersten Sprühstrahl S1 mit der ersten Sprühstrahlquerschnittsfläche Q1 und den zweiten Sprühstrahl S2 mit der zweiten Sprühstrahlquerschnittsfläche Q2, wobei der erste mit dem zweiten Sprühstrahl in einem Randbereich der Sprühstrahlen S1, S2 kollidiert und sich somit eine Schnittmenge U aus der ersten Sprühstrahlquerschnittsfläche Q1 mit der zweiten Sprühstrahlquerschnittsfläche Q2 ausbildet. Bei der Kollision des ersten Sprühstrahls S1 mit dem zweiten Sprühstrahl S2 bilden sich eine Scherebene und der vertikale Kollisionssprühfächer F aus. Die horizontale Anordnung des Kollisionssprühfächer F wird beispielsweise beeinflusst durch Größe und Position der Schnittmenge U, Strahlgeschwindigkeit, Intensität, Impuls, Konzentration, Dichte, Oberflächenspannung der Sprühzusammensetzung und Anteil an ungelösten Partikeln der Sprühstrahlen S1, S2 und kann als horizontaler Kollisionssprühfächerwinkel β angegeben werden. Der horizontaler Kollisionssprühfächerwinkel β zwischen der ersten und/oder der zweiten vertikalen Sprühebene E1, E2 und dem vertikal angeordneten Kollisionssprühfächer F kann im Bereich von 0° bis 89° und 180° bis 269° oder im Bereich von 91° bis 180° und 271° bis 360° liegen. Die vertikalen Sprühebenen E1, E2 sind parallel zueinander angeordnet.

Figur 2 III) zeigt schematisch die Kollision des ersten Sprühstrahls S1 mit dem zweiten Sprühstrahl S2, wobei die erste Sprühstrahlquerschnittsfläche Q1 gleich der zweiten Sprühstrahlquerschnittsfläche Q2 und gleich der Schnittmenge U ist. Der bei der Kollision ausgebildete Kollisionssprühfächer F weist bei übereinander liegenden gleichgroßen Sprühstrahlquerschnittsflächen Q1, Q2 einen Kollisionssprühfächerwinkel β von 90° auf. Die vertikalen Sprühebenen E1, E2 sind geradlinig zueinander angeordnet.

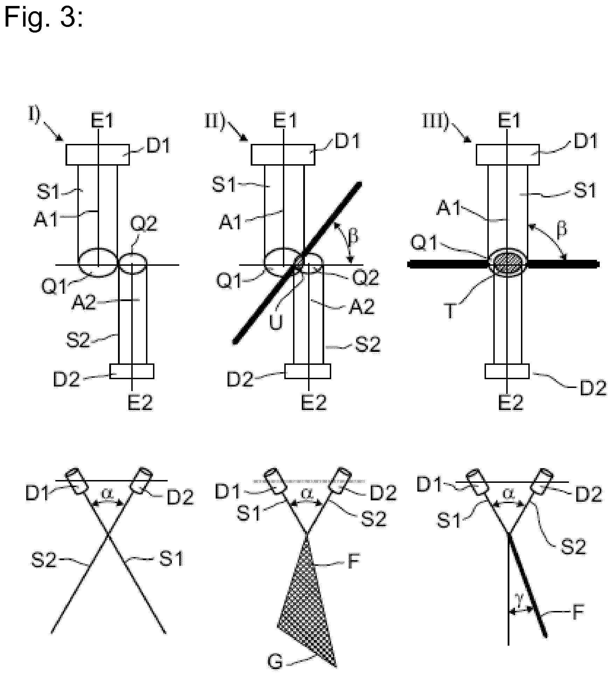

In Figur 3 werden schematisch in einer Aufsicht verschiedene Ausrichtungsmöglichkeiten der Sprühdüsen D1, D2, ausbildend die vertikalen Sprühebenen E1, E2 anhand der Sprühstrahlen S1, S2, deren Sprühstrahlquerschnittsflächen Q1, Q2 und Sprühstrahllängserstreckungsachsen A1, A2 zur Durchführung des erfindungsgemäßen Verfahrens gezeigt, wobei einer der Sprühstrahlen, vorliegend der zweite Sprühstrahl S2, eine kleinere Sprühstrahlquerschnittsfläche Q2 gegenüber der Sprühstrahlquerschnittsfläche Q1 hat.

Figur 3 I) zeigt den ersten Sprühstrahl S1 mit der ersten Sprühstrahlquerschnittsfläche Q1 und den zweiten Sprühstrahl S2 mit der zweiten, kleineren Sprühstrahlquerschnittsfläche Q2, wobei der erste mit dem zweiten Sprühstrahl nicht kollidiert und sich somit keine Schnitt- oder Teilmenge ausbildet. Es bildet sich kein Kollisionssprühfächer aus. Die vertikalen Sprühebenen E1, E2 sind parallel zueinander angeordnet. Die horizontale Anordnung des Kollisionssprühfächer F wird beispielsweise beeinflusst durch Größe und Position der Schnittmenge U, Strahlgeschwindigkeit, Intensität, Impuls, Konzentration, Dichte, Oberflächenspannung der Sprühzusammensetzung und Anteil an ungelösten Partikeln der Sprühstrahlen S1, S2 und kann als horizontaler Kollisionssprühfächerwinkel β angegeben werden. Der horizontaler Kollisionssprühfächerwinkel β zwischen der vertikal ersten und/oder der zweiten Sprühebene E1, E2 und dem vertikal angeordneten Kollisionssprühfächer F kann im Bereich von 0° bis 89° und 180° bis 269° oder im Bereich von 91° bis 180° und 271° bis 360° liegen. Die vertikalen Sprühebenen E1, E2 sind parallel zueinander angeordnet.

Figur 3 III) zeigt schematisch die Kollision des ersten Sprühstrahls S1 mit dem zweiten Sprühstrahl S2, wobei die zweite Sprühstrahlquerschnittsfläche Q2 eine Teilmenge T der ersten Sprühstrahlquerschnittsfläche Q1 ist. Der ausgebildete Kollisionssprühfächer F weist bei geradlinig zueinander angeordneten vertikalen Sprühebenen E1, E2 einen Kollisionssprühfächerwinkel β von 90° auf. Der bei der Kollision ausgebildete Kollisionssprühfächer F kann eine konische Form aufweisen. Die Form des Kollisionssprühfächers F wird beispielsweise beeinflusst durch Größe und Position der Teilmenge T, Strahlgeschwindigkeit, Intensität, Impuls, Konzentration, Dichte, Oberflächenspannung der Sprühzusammensetzung und Anteil an ungelösten Partikeln der Sprühstrahlen S1, S2. Abhängig von den zuvor genannten Parametern kann nach der Kollision des ersten S1 mit dem zweiten Sprühstrahl S2 von einem Kollisionspunkt ausgehend der im Gravitationsfeld ausbildete Kollisionssprühfächer auch ausgelenkt werden in einem vertikaler Auslenkungswinkel γ, welcher zwischen einer gedachten vertikalen Linie durch das Zentrum des Kollisionsbereiches und dem Kollisionssprühfächer F im Bereich von 1° bis 80° angeordnet sein kann.

Figur 4 zeigt schematisch eine Ausführungsform einer Düsenanordnung zur Durchführung des erfindungsgemäßen Verfahrens. Beispielhaft sind vier Düsenanordnungen aus der Figur 1 in Reihe hintereinander installiert. Die platzsparende Ausbildung der einzelnen Kollisionssprühfächer F1 bis F4 ermöglicht eine einfache modulweise Erweiterung der erfindungsgemäßen Düsenanordnung und Steigerung von Produktionskapazitäten.

Figur 5 zeigt die Partikelgrößenverteilungen der erhaltenen Produkte aus den Beispielen A bis E. Die Bestimmung der Partikelgrößenverteilung erfolgte nach der Laserbeugungsmethode mit einem Mastersizer 2000 des Unternehmens Malvern Instruments. Die Partikelgröße wurde als Durchmesser der volumengleichen Kugel angegeben. In Figur 5 sind die Volumenanteile in % über der Partikelgröße in µm dargestellt. Wie aus den einzelnen Verteilungskurven zu erkennen ist, liegen die Partikelgrößen der erhaltenen Produkte A bis E auch nach unterschiedlichen Verweilzeiten alle in einem ähnlichen Bereich. Die spezifische Oberfläche lag in einem Bereich von 0,09 bis 0,15 m²/g. Der Sauterdurchmesser D[3,2] (oder Oberflächengewichtet) lag in einem Bereich von 56 bis 65 µm. Der DeBroucker-Mittelwert D[4, 3] (oder Volumengewichtet) lag in einem Bereich von 80 bis 100 µm. Die Dv10-Werte lagen in einem Bereich von 34 bis 45 µm. Die Dv50-Werte lagen in einem Bereich von 73 bis 86 µm. Die Dv90-Werte lagen in einem Bereich von 140 bis 157 µm.

### Beispiel A:

In der Sprühdüsenanordnung zur Kollision von Sprühstrahlen wurden zwei sich gegenüberstehende Sprühdüsen angeordnet. In den Sprühdüsen war jeweils eine Blende von 200 µm installiert und ein 90 µm Filter vorgeschaltet. Beide Sprühdüsen waren auf einem Sprühkopf angeordnet. Zwischen den gegenüberstehenden Sprühdüsen wurde ein Winkel von 60° eingestellt. Der Zwischenraum zwischen den Düsen wurde mit Stickstoff gespült, um Fouling zu vermeiden. Die Düsen wurden mit einem absoluten Druck im Bereich von 30 bis 40 bar beaufschlagt. Die Rezeptur für die Herstellung von Polyamid 6 umfasste das Monomer Caprolactam mit 93,84 Gew.-%, den Aktivator Brüggolen® C20 der BrüggemannChemical mit 4,08 Gew.-% und den Katalysator Brüggolen® C10 der BrüggemannChemical mit 2,08 Gew.-%, bezogen auf das Gesamtgewicht der Rezeptur. Das Brüggolen® C20 umfasste ein blockiertes Diisocyanat in Caprolactam mit einem NCO-Gehalt von ca. 17 Gew.-%, bezogen auf das Gesamtgewicht des Brüggolen® C20. Das Brüggolen® C10 umfasste 17 bis 19 Gew.-% Na-Caprolactamat in Caprolactam, bezogen auf das Gesamtgewicht des Brüggolen® C10. Die erste Düse wurde mit einer fluiden Sprühzusammensetzung, umfassend Caprolactam und Aktivator, beaufschlagt. Die zweite Düse wurde mit einer fluiden Sprühzusammensetzung, umfassend Caprolactam, Katalysator und einen Farbstoff zur besseren visuellen Erfassung des Sprühstrahls, beaufschlagt. Die Sprühdüsen, der Vorlagetank und die Rohrleitungen wurden vor dem Versprühen auf eine Temperatur von über 90 °C erhitzt. Die nach der Kollision der Sprühstrahlen erhaltenen Partikel hatten eine mittlere Partikelgröße im Bereich von 70 bis 80 µm. Absolute Partikelgrößen könnten in einem Bereich von 1 bis 200 µm erzielt werden. Der Versuch wurde in einer inerten Gasatmosphäre mit Stickstoff durchgeführt. In der Partikelgrößenverteilung in Figur 5 dargestellt, betrug die Verweilzeit 45 min.

Das wie zuvor beschrieben hergestellte Polyamid 6 weist ein zahlenmittleres Molekulargewicht Mₙ im Bereich von 21400 bis 27000 g/mol und einer Polydispersität PD im Bereich von 3,3 bis 4,5 auf.

### Beispiele B bis E:

Die Beispiele B bis E wurden mit den gleichen chemischen und Verfahrenstechnischen Parametern wie in Beispiel A angegeben, durchgeführt, wobei in den Beispielen A und C anionisches PA6 Pulver hergestellt wurde. Die Beispiele A bis E unterscheiden sich hinsichtlich der Verweilzeiten. Die Verweilzeiten der einzelnen Beispiele waren wir folgt:
Beispiel A: 45 min
Beispiel B: 1h 20min
Beispiel C: 2h 20min
Beispiel D: 3h 20min
Beispiel E: 4h 20min

## Patentansprüche

1. Verfahren zur Herstellung von Polyamiden mit einer Sprühdüsenanordnung zur Kollision von Sprühstrahlen, umfassend die folgenden Schritte:
a) Bereitstellen einer ersten fluiden Sprühzusammensetzung und einer zweiten fluiden Sprühzusammensetzung mit der Maßgabe, dass
- die erste und/oder zweite fluide Sprühzusammensetzung wenigstens eine zur Polyamidbildung befähigte Komponente enthält, ausgewählt unter: Lactamen, Aminocarbonsäuren, Aminocarbonsäureamiden, Aminocarbonsäurenitrilen, Diaminen, Dicarbonsäuren, Dicarbonsäure-/ Diaminsalzen, Dinitrilen und Mischungen davon,
- für den Fall einer aktivierten anionischen Lactampolymerisation nur eine der beiden fluiden Sprühzusammensetzungen wenigstens einen Aktivator enthält und nur die andere wenigstens einen Katalysator enthält,
b) Versprühen einer der beiden fluiden Sprühzusammensetzungen durch die erste oder zweite Sprühdüse (D1, D2) unter Erhalt eines ersten Sprühstrahls (S1, S2) und Versprühen der anderen fluiden Sprühzusammensetzungen durch die andere Sprühdüse (D1, D2) unter Erhalt eines zweiten Sprühstrahls (S1, S2),
c) Kollidieren des ersten Sprühstrahls (S1) mit dem zweiten Sprühstrahl (S2), wobei die eine und die andere fluide Sprühzusammensetzung miteinander ein zur Polyamidbildung befähigtes Gemisch bildet, welches zu einem Polyamid reagiert, und sich zwischen der Sprühdüsenanordnung ein im Gravitationsfeld vertikal ausgerichteter Kollisionssprühfächer (F) ausbildet,
d) Austragen des in Schritt c) erhaltenen Polyamids,
e) gegebenenfalls Nachreinigung des in Schritt d) ausgetragenen Polyamids,
f) gegebenenfalls Trocknung des in Schritt d) ausgetragenen und/oder in Schritt e) nachgereinigten Polyamids;
wobei die Sprühdüsenanordnung
mindestens eine erste Sprühdüse (D1), ausbildend einen ersten Sprühstrahl (S1) mit einer ersten Sprühstrahlquerschnittsfläche (Q1) und einer ersten Sprühstrahllängserstreckungsachse (A1), wobei die erste Sprühstrahllängserstreckungsachse (A1) in einer ersten vertikalen Ebene (E1) im Gravitationsfeld ausgerichtet ist, und
eine zweite Sprühdüse (D2), ausbildend einen zweiten Sprühstrahl (S2) mit einer zweiten Sprühstrahlquerschnittsfläche (Q2) und einer zweiten Sprühstrahllängserstreckungsachse (A2), wobei die zweite Sprühstrahllängserstreckungsachse (A2) in einer zweiten vertikalen Ebene (E2) im Gravitationsfeld ausgerichtet ist, umfasst,
wobei die erste Sprühdüse (D1) und die zweite Sprühdüse (D2) eine dem Gravitationsfeld zugewandte Sprührichtung aufweisen und derart einander gegenüber angeordnet sind, dass die ausgebildeten Sprühstrahlen (S1, S2) in der dem Gravitationsfeld zugewandten Sprührichtung in einem Kollisionsbereich kollidieren,
wobei der zwischen der ersten Sprühstrahllängserstreckungsachse (A1) und der zweiten Sprühstrahllängserstreckungsachse (A2) eingeschlossene Winkel (α) im Bereich von 5° bis 170° ist,
und die erste Sprühdüse (D1) und die zweite Sprühdüse (D2) derart angeordnet sind, dass die erste Sprühstrahlquerschnittsfläche (Q1) des ersten Sprühstrahls (S1) mit der zweiten Sprühstrahlquerschnittsfläche (Q2) des zweiten Sprühstrahls (S2) beim Kollidieren eine Schnittmenge (U) bildet, und
wobei die erste und/oder zweite Sprühdüse einen Düsenkanaldurchmesser in einem Bereich von 25 bis 500 µm aufweist, und
die erste und/oder zweite Sprühstrahlquerschnittsfläche (Q1, Q2) in einem Bereich von 490 bis 197000 µm² liegt.

2. Verfahren nach Anspruch 1, wobei zumindest der Schritt b) in Gegenwart eines inerten Gases erfolgt.

3. Verfahren nach einem der Ansprüche 1 oder 2, wobei die erste und/oder die zweite fluide Sprühzusammensetzung wenigstens ein Lactam enthält, ausgewählt unter ε-Caprolactam, 2-Piperidon (δ-Valerolatam), 2-Pyrrolidon (γ-Butyrolactam), Capryllactam, Önanthlactam, Lauryllactam und Mischungen davon.

4. Verfahren nach einem der Ansprüche 1 bis 3, wobei die erste oder die zweite fluide Sprühzusammensetzung wenigstens einen Aktivator enthält, der ausgewählt ist unter Diisocyanaten, Polyisocyanaten, Disäurehalogeniden und Mischungen davon.

5. Verfahren nach einem der vorhergehenden Ansprüche, wobei die erste oder die zweite fluide Sprühzusammensetzung wenigstens einen Katalysator enthält, der ausgewählt ist unter Alkali- und Erdalkalimetallen, insbesondere von Natrium, Magnesium, Hydriden und Umsetzungsprodukten hiervon, insbesondere mit Lactamen.

6. Verfahren nach einem der vorhergehenden Ansprüche, wobei die in Schritt a) bereitgestellten fluiden Sprühzusammensetzungen eine Viskosität im Bereich von 1 bis 2000 mPa·s, bevorzugt im Bereich von 1 bis 300 mPa·s, ganz besonders bevorzugt im Bereich von 2 bis 10 mPa·s aufweisen.

7. Verfahren nach einem der vorhergehenden Ansprüche, wobei das Versprühen der fluiden Sprühzusammensetzungen und Erhalt des ersten und zweiten Sprühstrahls (S1, S2) in Schritt b) bei einem Druck im Bereich von 2 bis 200 bar, vorzugsweise im Bereich von 5 bis 100 bar, besonders bevorzugt in einem Bereich von 10 bis 50 bar erfolgt.

8. Verfahren nach einem der vorhergehenden Ansprüche, wobei das in Schritt c) erhaltene und in Schritt d) ausgetragene Polyamid Partikelgrößen in einem Bereich von 2 bis 500 µm, vorzugsweise im Bereich von 10 bis 200 µm, besonders bevorzugt im Bereich von 20 bis 100 µm aufweist.

9. Verfahren nach einem der vorhergehenden Ansprüche, wobei die erste und/oder zweite Sprühstrahlquerschnittsfläche (Q1, Q2) in einem Bereich von 1960 bis 50000 µm² liegt.

10. Verfahren nach einem der vorhergehenden Ansprüche, wobei mindestens zwei hintereinander angeordnete Sprühdüsenanordnungen, wie in einem der vorhergehenden Ansprüche definiert, verwendet werden.

11. Verfahren nach einem der vorhergehenden Ansprüche, wobei es sich bei der Herstellung von Polyamiden um eine anionische Lactampolymerisation handelt.

## Claims

1. A method of producing polyamides with a spray nozzle arrangement for colliding spray jets, comprising the following steps of:
a) providing a first fluid spray composition and a second fluid spray composition with the proviso that
- the first and/or second fluid spray composition comprises one or more components capable of polyamide formation which are selected from: lactams, aminocarboxylic acids, aminocarboxamides, aminocarbonitriles, diamines, dicarboxylic acids, dicarboxylic acid/diamine salts, dinitriles and mixtures thereof,
- in the event of an activated anionic lactam polymerization only one of the two fluid spray compositions comprises at least one activator and only the other comprises at least one catalyst,
b) spraying either of the two fluid spray compositions through the first or second spray nozzle (D1, D2) to obtain a first spray jet (S1, S2) and spraying the other fluid spray compositions through the other spray nozzle (D1, D2) to obtain a second spray jet (S1, S2),
c) colliding the first spray jet (S1) with the second spray jet (S2) whereby the two fluid spray compositions combine to form a mixture which is capable of polyamide formation and which reacts to form a polyamide and a collision spray fan (F) which is vertically aligned in the gravitational field forms between the spray nozzle arrangement,
d) discharging the polyamide obtained in step c),
e) optionally postpurifying the polyamide discharged in step d),
f) optionally drying the polyamide discharged in step d) and/or postpurified in step e);
wherein the spray nozzle arrangement comprises
at least a first spray nozzle (D1) forming a first spray jet (S1) with a first spray jet cross-sectional area (Q1) and a first spray jet longitudinal extent axis (A1), wherein the first spray jet longitudinal extent axis (A1) is aligned in a gravitational field in a first vertical plane (E1), and
a second spray nozzle (D2) forming a second spray jet (S2) with a second spray jet cross-sectional area (Q2) and a second spray jet longitudinal extent axis (A2), wherein the second spray jet longitudinal extent axis (A2) is aligned in a gravitational field in a second vertical plane (E2),
wherein the first spray nozzle (D1) and the second spray nozzle (D2) have a spray direction facing the gravitational field and are arranged relative to each other such that the resultant spray jets (S1, S2) collide in a collision region in the spray direction facing the gravitational field,
wherein the angle (α) between the first spray jet longitudinal extent axis (A1) and the second spray jet longitudinal extent axis (A2) is in the range from 5° to 170°,
and the first spray nozzle (D1) and the second spray nozzle (D2) are arranged such that the first spray jet cross-sectional area (Q1) of the first spray jet (S1) combines with the second spray jet cross-sectional area (Q2) of the second spray jet (S2) to form an intersection set (U) on collision, and
wherein the first and/or second spray nozzle has a nozzle channel diameter in a range of 25 to 500 µm, and
the first and/or second spray jet cross-sectional area (Q1, Q2) is in a range of 490 to 197 000 µm².

2. The method according to claim 1 wherein at least step b) is carried out in the presence of an inert gas.

3. The method according to either of claims 1 and 2 wherein the first and/or the second fluid spray composition comprises at least a lactam selected from ε-caprolactam, 2-piperidone (δ-valerolactam), 2-pyrrolidone (γ-butyrolactam), capryllactam, enantholactam, lauryllactam and mixtures thereof.

4. The method according to any of claims 1 to 3 wherein the first or the second fluid spray composition comprises at least an activator selected from diisocyanates, polyisocyanates, diacyl halides and mixtures thereof.

5. The method according to any preceding claim wherein the first or the second fluid spray composition comprises at least a catalyst selected from alkali and alkaline earth metals, in particular from sodium, magnesium, hydrides and reaction products thereof, in particular with lactams.

6. The method according to any preceding claim wherein the fluid spray compositions provided in step a) have a viscosity in the range from 1 to 2000 mPa.s, preferably in the range from 1 to 300 mPa.s and most preferably in the range from 2 to 10 mPa.s.

7. The method according to any preceding claim wherein the spraying of fluid spray compositions to obtain first and second spray jets (S1, S2) in step b) is effected at a pressure in the range from 2 to 200 bar, preferably in the range from 5 to 100 bar and more preferably in a range from 10 to 50 bar.

8. The method according to any preceding claim wherein the polyamide obtained in step c) and discharged in step d) has particle sizes in a range of 2 to 500 µm, preferably in the range from 10 to 200 µm, more preferably in the range of 20 to 100 µm.

9. The method according to any preceding claim wherein the first and/or second spray jet cross-sectional area (Q1, Q2) is in a range of 1960 to 50 000 µm².

10. The method according to any preceding claim wherein two or more serially arranged spray nozzle arrangements as defined in any preceding claim are used.

11. The method according to any preceding claim wherein the production of polyamides comprises an ionic lactam polymerization.

## Revendications

1. Procédé de fabrication de polyamides avec un agencement de buses de pulvérisation pour la collision de jets de pulvérisation, comprenant les étapes suivantes :
a) la préparation d'une première composition de pulvérisation fluide et d'une deuxième composition de pulvérisation fluide, à condition que
- la première et/ou la deuxième composition de pulvérisation fluide contiennent au moins un composant apte à la formation d'un polyamide, choisi parmi : les lactames, les acides aminocarboxyliques, les amides d'acides aminocarboxyliques, les nitriles d'acides aminocarboxyliques, les diamines, les acides dicarboxyliques, les sels d'acides dicarboxyliques/de diamines, les dinitriles et leurs mélanges,
- en cas d'une polymérisation de lactame anionique activée, seule une des deux compositions de pulvérisation fluides contienne au moins un activateur et seule l'autre contienne au moins un catalyseur,
b) la pulvérisation d'une des deux compositions de pulvérisation fluides par la première ou la deuxième buse de pulvérisation (D1, D2) pour obtenir un premier jet de pulvérisation (S1, S2) et la pulvérisation de l'autre composition de pulvérisation fluide par l'autre buse de pulvérisation (D1, D2) pour obtenir un deuxième jet de pulvérisation (S1, S2),
c) la collision du premier jet de pulvérisation (S1) avec le deuxième jet de pulvérisation (S2), la première et l'autre composition de pulvérisation fluide formant l'une avec l'autre un mélange apte à la formation d'un polyamide, qui réagit pour former un polyamide, et un éventail de pulvérisation de collision (F) orienté verticalement dans le champ de gravitation se formant entre l'agencement de buses de pulvérisation,
d) le déchargement du polyamide obtenu à l'étape c),
e) éventuellement la post-purification du polyamide déchargé à l'étape d),
f) éventuellement le séchage du polyamide déchargé à l'étape d) et/ou post-purifié à l'étape e) ;
l'agencement de buses de pulvérisation comprenant :
au moins une première buse de pulvérisation (D1), formant un premier jet de pulvérisation (S1) ayant une première surface de section transversale de jet de pulvérisation (Q1) et un premier axe d'extension longitudinale de jet de pulvérisation (A1), le premier axe d'extension longitudinale de jet de pulvérisation (A1) étant orienté dans un premier plan vertical (E1) dans le champ de gravitation, et
une deuxième buse de pulvérisation (D2), formant un deuxième jet de pulvérisation (S2) ayant une deuxième surface de section transversale de jet de pulvérisation (Q2) et un deuxième axe d'extension longitudinale de jet de pulvérisation (A2), le deuxième axe d'extension longitudinale de jet de pulvérisation (A2) étant orienté dans un deuxième plan vertical (E2) dans le champ de gravitation,
la première buse de pulvérisation (D1) et la deuxième buse de pulvérisation (D2) présentant une direction de pulvérisation orientée vers le champ de gravitation et étant agencées l'une par rapport à l'autre de telle sorte que les jets de pulvérisation formés (S1, S2) rentrent en collision dans une zone de collision dans la direction de pulvérisation orientée vers le champ de gravitation, l'angle (α) formé par le premier axe d'extension longitudinale de jet de pulvérisation (A1) et le deuxième axe d'extension longitudinale de jet de pulvérisation (A2) étant dans la plage allant de 5° à 170°,
et la première buse de pulvérisation (D1) et la deuxième buse de pulvérisation (D2) étant agencées de telle sorte que la première surface de section transversale de jet de pulvérisation (Q1) du premier jet de pulvérisation (S1) forme une intersection (U) avec la deuxième surface de section transversale de jet de pulvérisation (Q2) du deuxième jet de pulvérisation (S2) lors de la collision, et
la première et/ou la deuxième buse de pulvérisation présentant un diamètre de canal de buse dans une plage allant de 25 à 500 µm, et
la première et/ou la deuxième surface de section transversale de jet de pulvérisation (Q1, Q2) se situant dans une plage allant de 490 à 197 000 µm².

2. Procédé selon la revendication 1, dans lequel au moins l'étape b) a lieu en présence d'un gaz inerte.

3. Procédé selon l'une quelconque des revendications 1 ou 2, dans lequel la première et/ou la deuxième composition de pulvérisation fluide contiennent au moins un lactame, choisi parmi l'ε-caprolactame, la 2-pipéridone (δ-valérolactame), la 2-pyrrolidone (γ-butyrolactame), le capryllactame, l'énanthlactame, le lauryllactame et leurs mélanges.

4. Procédé selon l'une quelconque des revendications 1 à 3, dans lequel la première ou la deuxième composition de pulvérisation fluide contient au moins un activateur, qui est choisi parmi les diisocyanates, les polyisocyanates, les halogénures de diacides et leurs mélanges.

5. Procédé selon l'une quelconque des revendications précédentes, dans lequel la première ou la deuxième composition de pulvérisation fluide contient au moins un catalyseur, qui est choisi parmi les métaux alcalins et alcalino-terreux, notamment le sodium, le magnésium, les hydrures et leurs produits de réaction, notamment avec des lactames.

6. Procédé selon l'une quelconque des revendications précédentes, dans lequel les compositions de pulvérisation fluides préparées à l'étape a) présentent une viscosité dans la plage allant de 1 à 2 000 mPa·s, de préférence dans la plage allant de 1 à 300 mPa·s, de manière tout particulièrement préférée dans la plage allant de 2 à 10 MPa·s.

7. Procédé selon l'une quelconque des revendications précédentes, dans lequel la pulvérisation des compositions de pulvérisation fluides et l'obtention du premier et du deuxième jet de pulvérisation (S1, S2) à l'étape b) ont lieu à une pression dans la plage allant de 2 à 200 bar, de préférence dans la plage allant de 5 à 100 bar, de manière particulièrement préférée dans une plage allant de 10 à 50 bar.

8. Procédé selon l'une quelconque des revendications précédentes, dans lequel le polyamide obtenu à l'étape c) et déchargé à l'étape d) présente des tailles de particules dans une plage allant de 2 à 500 µm, de préférence dans la plage allant de 10 à 200 µm, de manière particulièrement préférée dans la plage allant de 20 à 100 µm.

9. Procédé selon l'une quelconque des revendications précédentes, dans lequel la première et/ou la deuxième surface de section transversale de jet de pulvérisation (Q1, Q2) se situent dans une plage allant de 1 960 à 50 000 µm².

10. Procédé selon l'une quelconque des revendications précédentes, dans lequel au moins deux agencements de buses de pulvérisation agencés en série, tels que définis dans l'une quelconque des revendications précédentes, sont utilisés.

11. Procédé selon l'une quelconque des revendications précédentes, dans lequel la fabrication de polyamides consiste en une polymérisation anionique de lactame.
